(19) Europäisches Patentamt
European Patent Office
Office européen des brevets

(11) **EP 2 328 048 A1**

(12) **EUROPÄISCHE PATENTANMELDUNG**

(43) Veröffentlichungstag:
01.06.2011 Patentblatt 2011/22

(51) Int Cl.:
*G05B 19/042* (2006.01)    *G05B 23/02* (2006.01)

(21) Anmeldenummer: 09177396.0

(22) Anmeldetag: 27.11.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA RS

(71) Anmelder: SIEMENS AKTIENGESELLSCHAFT
80333 München (DE)

(72) Erfinder: Colado Garcia, Hector
76133 Karlsruhe (DE)

(54) **Verfahren und Anordnung zum Betreiben eines Bedien- und Beobachtungsgeräts**

(57)    Es wird ein Verfahren und eine Anordnung zum Betreiben eines Bedien- und Beobachtungsgerätes vorgeschlagen, das zur Darstellung eines Prozessbildes (1) vorgesehen ist, welches einen zu steuernden technischen Prozess repräsentiert. Das Prozessbild (1) umfasst mehrere Bildobjekte (2, 3, 4), welche mittels einer Software aus Instanzen (13, 14, 15) erzeugt werden, wobei jede Instanz (13, 14, 15) aus einem mit basisparametrierbaren Eigenschaften versehenen Typ gebildet wird, indem dieser Typ dupliziert oder dieser Typ dupliziert und mindestens ein Parameter dieses Typs instanzspezifisch geändert wird. Es werden Maßnahmen vorgeschlagen, wodurch die Ladezeit eines Prozessbildes (1) erheblich reduziert wird.

FIG 2

EP 2 328 048 A1

**Beschreibung**

Die Erfindung betrifft ein Verfahren zum Betreiben eines Bedien- und Beobachtungsgeräts, das zur Darstellung eines Prozessbildes vorgesehen ist, welches einen zu steuernden technischen Prozess repräsentiert, wobei das Prozessbild mehrere Bildobjekte umfasst, welche mittels einer Software aus Instanzen erzeugt werden, wobei jede Instanz aus einem mit basisparametrierbaren Eigenschaften versehenen Typ gebildet wird, indem dieser Typ dupliziert oder dieser Typ dupliziert und mindestens ein Parameter dieses Typs instanzspezifisch geändert wird. Darüber hinaus betrifft die Erfindung eine Anordnung gemäß dem Oberbegriff des Anspruchs 2, die zur Durchführung des Verfahrens geeignet ist.

Aus dem "Siemens-Katalog ST 80", Ausgabe 2009 sind Bedien- und Beobachtungssysteme mit geeigneter Software bekannt, die zum Bedienen und Beobachten von zu steuernden technischen Prozessen bzw. von Fertigungsabläufen einer Anlage oder einer Maschine vorgesehen sind. Gewöhnlich wird dazu auf einem Engineering-System im Rahmen eines Automatisierungsprojektes eine Vielzahl von mehreren Bildobjekten aufweisenden Prozessbildern erstellt, die den zu steuernden technischen Prozess oder Teile dieses Prozesses repräsentieren. Das Engineering-System weist dazu eine geeignete Projektierungs-Software auf, mittels der ein Operator das Prozessbild oder je nach Komplexität einer Anlage eine Vielzahl von Prozessbildern erstellt, wobei die erstellten Bilder gewöhnlich auf einem Runtime-Server gespeichert werden.
Während eines Runtime-Betriebs, während dessen eine dazu vorgesehene Automatisierungseinrichtung den Prozess steuert, ist es häufig erforderlich, dass ein Bediener mehrere Prozessbilder oder mehrere hundert Bildobjekte anwählt bzw. aufruft, um einerseits einen Überblick über den aktuellen Anlagenzustand oder über den Zustand von Teilen oder Komponenten dieser Anlage zu erhalten und andererseits eine Prozessführung bzw. -bedienung bewirken zu können. Beispielsweise weist zu einem Zeitpunkt ein einen Heizkessel repräsentierendes Bildobjekt in einer Farbe Blau auf einen leeren Heizkessel, zu einem späteren Zeitpunkt dagegen weist das in einer Farbe Rot dargestellte Bildobjekt auf einen gefüllten Heizkessel hin. Je nach Anzahl der Prozessbilder bzw. der Bildobjekte in einem Prozessbild ist es daher erforderlich, die Darstellung einer Vielzahl von Bildobjekten dynamisch an den zu steuernden Prozess "anzupassen", was bedeutet, dass viel Zeit zum Laden der sich dynamisch ändernden Bildobjekte benötigt wird. Dies wirkt sich nachteilig auf die Überwachung bzw. Kontrolle des Prozesses bzw. der Anlage aus. Für den Fall, dass z. B. eine Instanz aus einem mit dreißig basisparametrierbaren Eigenschaften versehenen Typ gebildet wurde und für die Instanz lediglich ein Parameter zu ändern ist, beispielsweise weil aufgrund eines Prozessereignisses ein Bildobjekt anstatt in einer Farbe Grün in einer Farbe Rot darzustellen ist, so wird in an sich bekannter Weise zur Darstellung des geänderten Bildobjekts die Instanz mit allen Parametern geladen. Dies bedeutet, dass sowohl der neue bzw. geänderte als auch die nicht geänderten neunundzwanzig Parameter geladen werden.

Der vorliegenden Erfindung liegt die Aufgabe zugrunde, ein Verfahren zum Betreiben eines Bedien- und Beobachtungsgeräts der eingangs genannten Art anzugeben, welches die genannten Nachteile vermeidet. Darüber hinaus ist eine Anordnung zu schaffen, die zur Durchführung des Verfahrens geeignet ist.

Im Hinblick auf das Verfahren wird diese Aufgabe dadurch gelöst, dass zum Speichern des Prozessbildes zu jeder Instanz eine Typkennung und die geänderten instanzspezifischen Parameter hinterlegt werden, wobei die Typkennung den Typ kennzeichnet, aus welchem die Instanz zu bilden ist, und dass zum Erzeugen des Prozessbildes die Typkennungen und die instanzspezifischen Parameter geladen werden, wobei die jeweilige Typkennung den Typ identifiziert, aus welchem mit den instanzspezifischen Parametern die jeweilige Instanz erzeugt wird. Im Hinblick auf die Anordnung wird diese Aufgabe durch die im kennzeichnenden Teil des Anspruchs 2 angegebenen Maßnahmen gelöst.

Vorteilhaft ist, dass die Ladezeit eines Prozessbildes erheblich reduziert wird. Dies gewährleistet eine verbesserte Kontrolle sowie Sicherheit und Verfügbarkeit einer Anlage während eines Wechsels eines Prozessbildes, weil aufgrund der verkürzten Ladezeit eine schnelle Reaktionszeit im Hinblick auf Benutzeraktionen ermöglicht wird. Ferner ist weniger Speicherplatz zur Hinterlegung eines Prozessbildes erforderlich, wodurch mehr Speicherplatz für weitere Bilder zur Verfügung steht.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1     ein auf einem Bedien- und Beobachtungsgerät dargestelltes Prozessbild und
Figur 2     Instanzen eines Prozessbildes.

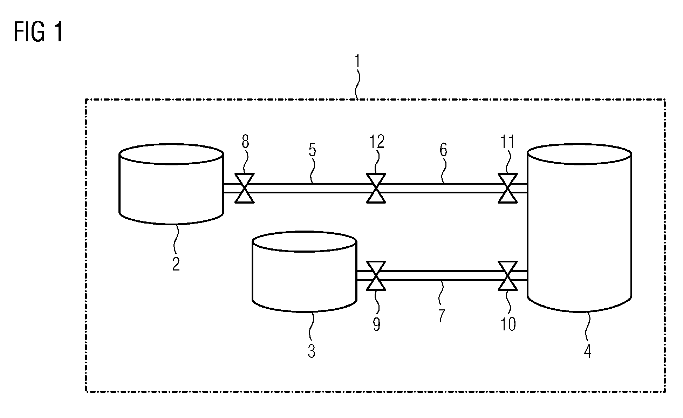

In Figur 1 ist mit 1 ein auf einem Bedien- und Beobachtungsgerät dargestelltes Prozessbild bezeichnet, welches eine zu steuernde Produktionsanlage repräsentiert. Das Bedien- und Beobachtungsgerät ist Bestandteil eines Prozessleitsystems, welches weitere Bestandteile wie mindestens ein Engineering-System, unterschiedliche Automatisierungsgeräte, ferner Aktoren und Sensoren sowie weitere zur Steuerung der Produktionsanlage erforderliche Automatisierungskomponenten umfasst, wobei die Teile über einen Bus miteinander verbunden sind. Die Automatisierungsgeräte können unterschiedlich ausgebildet sein. So sind gewöhnlich Automatisierungsgeräte zur Lösung kleiner, mittlerer und größerer Automatisierungsaufgaben innerhalb der Automatisierungseinrichtung vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Mit welchen Hard- und Softwarekomponenten, d. h. mit welchen Automatisierungsgeräten, Bedien- und Beobachtungsgeräten, Bussystemen, Aktoren und Sensoren, und mit welchen Steuerprogrammen die Automatisierungseinrichtung zu versehen ist, ist abhängig von der Komplexität der zu steuernden technischen Anlage und der Steueraufgabe, wobei die erforderlichen Hard- und Softwarekomponenten der Automatisierungseinrichtung durch das Engineering-System projektierbar und/oder konfigurierbar sind.

Im vorliegenden Beispiel umfasst das mittels einem Engineering-System projektierte Prozessbild 1 mehrere Bildobjekte 2 bis 12, von denen die Bildobjekte 2, 3, 4 einen ersten Behälter, z. B. einen Behälter für einen Ausgangsstoff, einen Reaktor und einen zweiten Behälter, beispielsweise einen Behälter für ein Produkt, darstellen. Die weiteren Bildobjekte 5, 6, 7 repräsentieren Rohrleitungen, welche die Behälter verbinden, wobei in Form von Bildobjekten 8, 9, 10, 11, 12 angezeigte Ventile zum Öffnen bzw. Schließen der Rohrleitungen vorgesehen sind.

Das mehrere Bildobjekte 2 bis 12 umfassende Prozessbild 1 erstellt ein Anwender im Rahmen einer Projektierungsphase mittels des Engineering-Systems. Das Engineering-System weist eine Projektierungs-Software auf, die einem Anwender bzw. Projektierer eine Vielzahl von auf einer Anzeigeeinheit des Engineering-Systems dargestellten Basis-Bildobjekten bereitstellt, welche der Anwender z. B. mittels einer so genannten Maus auf dieser Anzeigeeinheit positioniert und aus welchen der Anwender durch entsprechende Änderungen an den Basis-Bildobjekten die Bildobjekte 2 bis 4 erstellt. Die Projektierungs-Software erzeugt diese Basis-Bildobjekte aus Typen, welche mit einer Vielzahl von basisparametrierbaren Eigenschaften versehen sind, wobei die Projektierungs-Software aus diesen Typen und aus den durch den Anwender vorgegebenen Parametern Instanzen erzeugt, die als Bildobjekte 2 bis 12 auf dem Engineering-System dargestellt werden. Dazu dupliziert die Projektierungs-Software diese Typen, wobei die basisparametrierbaren Eigenschaften dieser Typen in den Duplikaten entsprechend den Parametereingaben des Anwenders geändert werden. Selbstverständlich kann der Anwender auf Parametereingaben verzichten, wodurch in diesem Fall eine Instanz nur durch Duplizieren eines Typs erzeugt wird.

Der Einfachheit halber wird im Folgenden lediglich die Projektierung der Bildobjekte 2 bis 4 näher betrachtet.

Im vorliegenden Ausführungsbeispiel basieren die Instanzen 13, 14, 15 jeweils auf einem Typ "Zylinder", wobei dieser Typ z. B. dreißig Eigenschaften aufweist, z. B. Eigenschaften wie Zylinderhöhe, Zylinder-Grundflächenradius, x/y-Position des Zylinders im Bild oder Farbe des Zylinders, .... Die Projektierungs-Software erzeugt demnach das Prozessbild 1 aus drei Instanzen, die aus dem Typ "Zylinder" gebildet sind und deren Eigenschaften mit teilweise identischen Parametern und teilweise mit unterschiedlichen Parametern versehen sind.

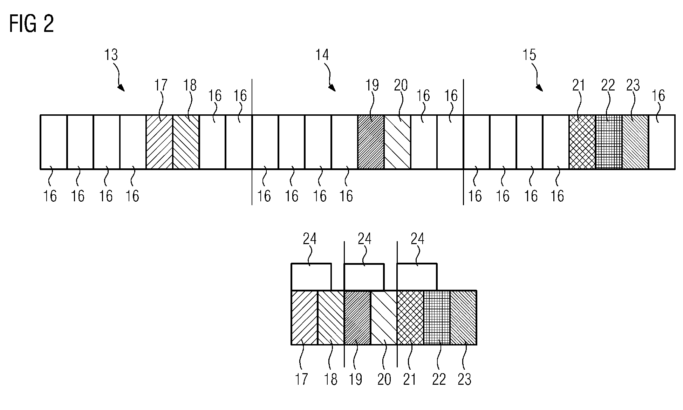

In diesem Zusammenhang wird auf Figur 2 verwiesen, in der Instanzen 13, 14, 15 der in der Figur 1 gezeigten Bildobjekte 2, 3, 4 des Prozessbildes 1 dargestellt sind. Jede dieser Instanzen 13, 14, 15 ist aus dem gleichen Typ "Zylinder" gebildet, der dreißig basisparametrierbare Eigenschaften umfasst. Diese Instanzen 13, 14, 15 weisen eine Vielzahl von Eigenschaften 16 mit identischen Parametern auf, welche den Basisparametern der entsprechenden parametrierbaren Eigenschaften des Typs "Zylinder" entsprechen. Beispielsweise weist jeweils eine mit einem gleichen Parameter versehene Eigenschaft 16 darauf hin, dass die Bildobjekte 3, 4, 5 in einer Farbe Grau darzustellen sind. Ferner weisen parametrierbare Eigenschaften 17 bis 23 der Instanzen 13, 14, 15 unterschiedliche Parameter auf, was darauf hinweist, dass die entsprechenden Basis-Parameter des jeweils duplizierten Typs "Zylinder" instanzspezifisch geändert sind. Die parametrierbaren Eigenschaften 17, 18 der Instanz 13, die parametrierbaren Eigenschaften 19, 20 der Instanz 14 sowie die parametrierbaren Eigenschaften 21, 22 der Instanz 15 zeigen den Instanzen 13, 14, 15 z. B. die jeweilige x-, y-Position der Bildobjekte 2, 3, 4 innerhalb des Prozessbildes 1 an, die von den basisparametrierbaren Eigenschaften der x-, y-Position des Typs "Zylinders" abweicht, beispielsweise von einer Position x=y=0, die der Bildmitte entspricht.

Um den Speicherplatz zur Hinterlegung eines Prozessbildes zu minimieren, hinterlegt die Projektierungs-Software in einem Speicher des Engineering-Systems, des Bedien- und Beobachtungsgerätes oder eines Runtime-Systems nur die in den jeweiligen Typen vorgenommenen Parameteränderungen der parametrierbaren Eigenschaften sowie diesen Typen zugeordnete Typkennungen, wobei eine Typkennung kennzeichnet, aus welchem Typ eine Instanz gebildet ist. Im vorliegenden Beispiel werden nur die geänderten Parameter der Eigenschaften 17, 18 der Instanz 13 mit einer dazugehörigen Typkennung 24 (Kennung des Typs "Zylinder"), die geänderten Parameter der Eigenschaften 19, 20 der Instanz 14 mit der Typkennung 24 und die geänderten Parameter der Eigenschaften 21, 22, 23 der Instanz 15 ebenfalls mit der Typkennung 24 in den Speicher hinterlegt. Die Basisparameter der Eigenschaften 16 werden nicht abgespeichert.

Aufgrund dessen, dass lediglich diese Änderungen und die Typkennungen abgespeichert sind, wird die Ladezeit, die benötigt wird, um die Daten vom Speicher auszulesen und in dem Bedien- und Beobachtungsgerät zur Erzeugung des Prozessbildes zu hinterlegen, wesentlich reduziert. Es wird angenommen, dass auf dem Bedien- und Beobachtungsgerät der Typ "Zylinder" bereits hinterlegt ist und die Typkennungen 24 mit den jeweiligen Parametern der Eigenschaften 17 bis 23 geladen werden. In diesem Fall erzeugt eine Visualisierungs-Software des Bedien- und Beobachtungsgerätes aus diesen geladenen Informationen die Bildobjekte 2, 3, 4 des Prozessbildes 1, indem diese Software mittels der Typkennung den Typ "Zylinder" zunächst dreimal dupliziert und schließlich zur Erzeugung der Instanzen 13, 14, 15 die instanzspezifischen Parameter der parametrierbaren Eigenschaften 17 bis 23 in diese Duplikate einschreibt.

Für den Fall, dass der Typ "Zylinder" nicht auf dem Bedien- und Beobachtungsgerät sondern z. B. auf dem Runtime-Server oder in dem Engineering-System hinterlegt ist, ist es erforderlich, neben der Typkennung 24 und den Parametern der Eigenschaften 17 bis 23 auch den Typ "Zylinder" in das Bedien- und Beobachtungsgerät zu laden, um die Bildobjekte 2, 3, 4 des Prozessbildes 1 in der beschriebenen Art und Weise zu erstellen.

In einem praktischen Ausführungsbeispiel der Erfindung wird die Reduzierung der Ladezeit eines Projektes besonders deutlich. Diese Ladezeit wird benötigt, um das Projekt aus einem Speicher eines Runtime-Servers oder eines Engineering-Systems auszulesen und in das Bedien- und Beobachtungsgerät zu laden, wobei das Projekt aus zehn Prozessbildern besteht. Diese zehn Prozessbilder umfassen jeweils zwanzig Instanzen, welche auf drei Typen basieren. Die Typen weisen jeweils dreißig parametrierbare Eigenschaften auf, von denen jeweils fünf Eigenschaften mit instanzspezifischen Parametern dynamisch geändert werden. Die Ladezeit einer einzelnen Eigenschaft beträgt 0,0002 Sekunden, wodurch sich folgende Projekt-Ladezeit ergibt:

Ladezeit der drei Typen mit je dreißig Eigenschaften:

```
3x30x0,0002 s = 0,018 s
```

Ladezeit der fünf Parameteränderungen in zehn Bildern mit jeweils zwanzig Instanzen:

```
10x20x5x0,0002 s = 0,2 s
```

Gesamtladezeit = 0,218 s.

Die Ladezeit dieses Projektes beträgt nach herkömmlichen Verfahren:

```
10 (Bilder)x20 (Instanzen)x30 (Eigenschaften)x0,0002 = 1,2 s.
```

Die Vorteile im Vergleich zu herkömmlichen Verfahren lassen sich wie folgt kurz zusammenfassen:

a) je weniger Parameter einer Instanz sich von den Basisparametern eines Typs unterscheiden, aus welchem die Instanz erzeugt wurde, oder
b) je mehr Instanzen auf einem Typ basieren,

desto schneller ist der Ladevorgang und desto geringer der benötigte Speicherplatz zur Hinterlegung des Prozessbildes.

Im gezeigten Ausführungsbeispiel wurde lediglich Bezug genommen auf Parameteränderungen im Hinblick auf parametrierbare Eigenschaften eines Typs. Die Erfindung ist selbstverständlich nicht beschränkt auf Parameter von derartigen Eigenschaften, vielmehr kann die Erfindung auch auf Parameteränderungen von Ereignissen angewendet werden. Ein derartiges Ereignis wird beispielsweise durch eine Anwahl eines Bildobjektes mittels einer Maus bewirkt, aufgrund dessen das angewählte Bildobjekt seine Position im Prozessbild ändert. Ein Ereignis kann auch ein Prozessereignis sein, aufgrund dessen sich z. B. die Position eines Füllstandsbalkens im Prozessbild verschiebt.

**Patentansprüche**

1. Verfahren zum Betreiben eines Bedien- und Beobachtungsgeräts, das zur Darstellung eines Prozessbildes (1) vorgesehen ist, welches einen zu steuernden technischen Prozess repräsentiert, wobei das Prozessbild (1) mehrere Bildobjekte (2, 3, 4) umfasst, welche mittels einer Software aus Instanzen (13, 14, 15) erzeugt werden, wobei jede Instanz (13, 14, 15) aus einem mit basisparametrierbaren Eigenschaften versehenen Typ gebildet wird, indem dieser Typ dupliziert oder dieser Typ dupliziert und mindestens ein Parameter dieses Typs instanzspezifisch geändert wird, **dadurch gekennzeichnet, dass**

- zum Speichern des Prozessbildes (1) zu jeder Instanz (13, 14, 15) eine Typkennung (24) und die geänderten instanzspezifischen Parameter hinterlegt werden, wobei die Typkennung (24) den Typ kennzeichnet, aus welchem die Instanz (13, 14, 15) gebildet ist,
- zum Erzeugen des Prozessbildes (1) die Typkennungen (24) und die instanzspezifischen Parameter geladen werden, wobei die jeweilige Typkennung (24) den Typ identifiziert, aus welchem mit den instanzspezifischen Parametern die jeweilige Instanz erzeugt wird.

2. Anordnung mit einem Bedien- und Beobachtungsgerät und einem Engineering-System, wobei das Bedien- und Beobachtungsgerät zur Darstellung eines Prozessbildes (1) vorgesehen ist, welches einen zu steuernden technischen Prozess repräsentiert, wobei das Prozessbild (1) mehrere Bildobjekte (2, 3, 4) umfasst, welche eine Software des Engineering-Systems aus Instanzen (13, 14, 15) erzeugt, wobei die Software jede Instanz (13, 14, 15) aus einem mit basisparametrierbaren Eigenschaften versehenen Typ bildet, indem die Software diesen Typ dupliziert oder diesen Typ dupliziert und mindestens einen Parameter dieses Typs instanzspezifisch ändert, **dadurch gekennzeichnet, dass**

- das Bedien- und Beobachtungsgerät, das Engineering-System oder ein Server dazu ausgebildet sind, zum Speichern des Prozessbildes (1) zu jeder Instanz (13, 14, 15) eine Typkennung (24) und die geänderten instanzspezifischen Parameter zu hinterlegen, wobei die Typkennung (24) den Typ kennzeichnet, aus welchem die Instanz (13, 14, 15) gebildet ist,
- das Bedien- und Beobachtungsgerät dazu ausgebildet ist, zum Erzeugen des Prozessbildes (1) die Typkennungen (24) und die instanzspezifischen Parameter zu laden, wobei die jeweilige Typkennung (24) den auf dem Bedien- und Beobachtungsgerät hinterlegten Typ identifiziert, aus welchem das Bedien- und Beobachtungsgerät mit den instanzspezifischen Parametern die jeweilige Instanz erzeugt.

FIG 1

FIG 2

Europäisches
Patentamt

European
Patent Office

Office européen
des brevets

# EUROPÄISCHER RECHERCHENBERICHT

Nummer der Anmeldung

EP 09 17 7396

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/224361 A1 (MCINTYRE JAMES P [US] ET AL) 5. Oktober 2006 (2006-10-05)<br>* Zusammenfassung; Abbildungen 3,10,11,13 *<br>* Absatz [0008] *<br>* Absätze [0040] - [0042] *<br>* Absätze [0062] - [0065] *<br>* Absatz [0101] *<br>* Absätze [0109] - [0125] *<br>----- | 1,2 | INV.<br>G05B19/042<br>G05B23/02 |
| X | US 2007/165031 A1 (GILBERT STEPHEN [US] ET AL) 19. Juli 2007 (2007-07-19)<br>* Absätze [0015], [0053], [0109] - [0112] *<br>----- | 1,2 | |
| X | US 7 324 856 B1 (BROMLEY CLIFTON HAROLD [CA]) 29. Januar 2008 (2008-01-29)<br>* Zusammenfassung *<br>* Spalte 2, Zeile 36 - Spalte 4, Zeile 23 *<br>* Spalte 8, Zeile 63 - Spalte 9, Zeile 34 *<br>* Spalte 17, Zeile 17 - Spalte 18, Zeile 5 *<br>----- | 1,2 | |
| A | US 2007/168060 A1 (NIXON MARK J [US] ET AL) 19. Juli 2007 (2007-07-19)<br>* Absätze [0015], [0044] - [0047], [0054], [0058], [0082] - [0086], [0110] - [0116] *<br>----- | 1,2 | |
| A | US 5 526 268 A (TKACS DENNIS P [US] ET AL) 11. Juni 1996 (1996-06-11)<br>* das ganze Dokument *<br>----- | 1,2 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| München | 3. Mai 2010 | Schriefl, Josef |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 09 17 7396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2010

| Im Recherchenbericht angeführtes Patentdokument | Datum der Veröffentlichung | Mitglied(er) der Patentfamilie | Datum der Veröffentlichung |
|---|---|---|---|
| US 2006224361 A1 | 05-10-2006 | EP 1410228 A2 | 21-04-2004 |
| | | WO 03001334 A2 | 03-01-2003 |
| | | US 2003009253 A1 | 09-01-2003 |
| | | US 2005060408 A1 | 17-03-2005 |
| US 2007165031 A1 | 19-07-2007 | KEINE | |
| US 7324856 B1 | 29-01-2008 | US 2008140230 A1 | 12-06-2008 |
| US 2007168060 A1 | 19-07-2007 | CN 1950760 A | 18-04-2007 |
| | | CN 1950771 A | 18-04-2007 |
| | | CN 1950761 A | 18-04-2007 |
| | | CN 1950762 A | 18-04-2007 |
| | | CN 1954273 A | 25-04-2007 |
| | | CN 1950763 A | 18-04-2007 |
| | | CN 1997948 A | 11-07-2007 |
| | | CN 1961314 A | 09-05-2007 |
| | | CN 1950764 A | 18-04-2007 |
| | | CN 1961288 A | 09-05-2007 |
| | | CN 1965558 A | 16-05-2007 |
| | | CN 1950765 A | 18-04-2007 |
| | | CN 1950766 A | 18-04-2007 |
| | | CN 1950767 A | 18-04-2007 |
| | | DE 112005001012 T5 | 06-06-2007 |
| | | DE 112005001030 T5 | 24-05-2007 |
| | | DE 112005001031 T5 | 14-06-2007 |
| | | DE 112005001032 T5 | 28-06-2007 |
| | | DE 112005001033 T5 | 26-04-2007 |
| | | DE 112005001040 T5 | 19-04-2007 |
| | | DE 112005001042 T5 | 03-05-2007 |
| | | DE 112005001043 T5 | 28-06-2007 |
| | | DE 112005001044 T5 | 26-04-2007 |
| | | DE 112005001045 T5 | 19-04-2007 |
| | | EP 1784695 A1 | 16-05-2007 |
| | | EP 1751631 A1 | 14-02-2007 |
| | | EP 1749270 A2 | 07-02-2007 |
| | | EP 1751632 A1 | 14-02-2007 |
| | | GB 2427937 A | 10-01-2007 |
| | | GB 2429387 A | 21-02-2007 |
| | | GB 2429388 A | 21-02-2007 |
| | | GB 2429389 A | 21-02-2007 |
| | | GB 2430285 A | 21-03-2007 |
| | | GB 2429794 A | 07-03-2007 |
| | | GB 2427938 A | 10-01-2007 |
| | | GB 2430598 A | 28-03-2007 |
| | | GB 2428841 A | 07-02-2007 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 09 17 7396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2010

| Im Recherchenbericht angeführtes Patentdokument | Datum der Veröffentlichung | Mitglied(er) der Patentfamilie | | Datum der Veröffentlichung |
|---|---|---|---|---|
| US 2007168060 A1 | | GB | 2427939 A | 10-01-2007 |
| | | GB | 2430599 A | 28-03-2007 |
| | | GB | 2430339 A | 21-03-2007 |
| | | GB | 2431492 A | 25-04-2007 |
| | | GB | 2431553 A | 25-04-2007 |
| | | GB | 2449378 A | 19-11-2008 |
| | | GB | 2449379 A | 19-11-2008 |
| | | GB | 2449380 A | 19-11-2008 |
| | | GB | 2449013 A | 05-11-2008 |
| | | GB | 2449786 A | 03-12-2008 |
| | | GB | 2448841 A | 29-10-2008 |
| | | HK | 1096733 A1 | 06-03-2009 |
| US 5526268 A | 11-06-1996 | CN | 1120701 A | 17-04-1996 |
| | | CZ | 9501182 A3 | 15-01-1997 |
| | | JP | 8044519 A | 16-02-1996 |
| | | PL | 308515 A1 | 13-11-1995 |

EPO FORM P0461

Für nähere Einzelheiten zu diesem Anhang : siehe Amtsblatt des Europäischen Patentamts, Nr.12/82